# EUROPEAN PATENT APPLICATION

(11) **EP 1 120 760 A2**
(43) Date of publication of application: **01.08.2001**
(21) Application number: 00128732.5
(22) Date of filing: 29.12.2000
(51) Int. Cl.: G07F 19/00, G06F 17/60

(54) **Digital cash system, settlement system, shop terminal and information processor**

(30) Priority: 12.01.2000 JP 2000003920
(71) Applicant: FUJITSU LIMITED, Kawasaki-shi, Kanagawa 211-8588 (JP)
(72) Inventor: Minagawa, Akitaka, Fujitsu Limited, Kawasaki-shi, Kanagawa 211-8588 (JP)
(74) Representative: Sunderland, James Harry

(57) **Abstract**

A digital cash payment system which improves convenience for users and motivates the customers to utilize the digital cash payment system. Information about the shopping of customers utilizing the digital cash payment system is stored in accordance with the account information of customers stored in the host computer of the financial institution such as a bank. The detailed information of shopping made by utilizing the digital cash payment system is transferred to the host computer of the bank from a shop terminal and a customer is capable of outputting the shopping history information stored in the host computer of the bank by utilizing the host computer of shop and the automatic teller machine. Propriety for collection of shopping information can be set selectively for each customer.

## Description

### BACKGROUND OF THE INVENTION

### 1. Field of the Invention

The present invention relates to a digital cash system and, more particularly, to a digital cash system of a type utilizing a cash card issued by a financial institution. Moreover, the present invention relates to a novel service offered to customers from a financial institution.

### 2. Description of the Related Art

In recent years, an electronic payment system has been gradually introduced into shopping stores. A customer is no longer required to carry cash money by introducing settlement with an electronic payment system for shopping and, therefore, attention is paid to this electronic payment system as a more simplified settlement method for the shopping.

Several schemes have been proposed for the electronic payment system. In one type of electronic payment system, an electronic monetary value is written on a storage medium, such as an IC card, and this electronic monetary value is shifted to a shopping store from a customer when the customer makes a payment for an amount of shopping, or an amount of shopping is shifted directly to the account of the shopping store from the account of a customer utilizing a cash card issued from a financial institution such as a bank. The latter example is particularly called a "cash card type electronic payment system".

The current electronic payment system is only for the settlement for the amount of shopping. Therefore. this electronic payment system is deficient for settlement by cash from the viewpoint of the user. except for the mere fact that cash is never required at the time of settlement for shopping. Because of such circumstances, a user, namely a customer, is not motivated to positively utilize the settlement by electronic payment system in place of settling with cash and this is a reason why the electronic payment system is not becoming more widely accepted. When sufficient popularization of electronic payment system is desired, the service must possess a large additional value to users.

Considering the circumstances explained above, the object of the present invention is to realize a new electronic payment system (digital cash system) which can provide a large benefit to the user, namely a customer.

Moreover, another object of the present invention is to offer a new service to customers by a financial institution such as a bank used at the time of settlement by the digital cash system.

Another object of the present invention is to offer a system with which a customer can easily obtain shopping history information.

### Summary of the Invention

In order to solve the problems explained above, the present invention includes a digital cash system in which shop computers and a host computer of a financial institution are connected through a communication network. The shop computer is provided with a reading means for reading information stored in a cash card and an adjusting means, and the information for identifying the account of each customer, information about the balance of the account and shopping history information for the shopping conducted using the digital cash payment system by the customer having the account are recorded in the computer of the financial institution.

Moreover, the present invention includes a settlement system comprising an input means for inputting information for identifying the account of customer, a searching means for searching, based on the input account identifying information. the account information corresponding to the account identifying information from the storage means in which the account information of each customer is stored, a determining means for determining whether or not the shopping history information of the customer is stored in the account information, and an output means for outputting the shopping history information when the shopping history information is stored.

Moreover, the present invention includes a shop terminal which is connected to a computer of the financial institution and which comprises a reading means for reading the account information of the customer from the storage medium carried by the customer and an input means for inputting the password of the customer. Thereby, the account information read from the storage medium at the time of shopping by the customer is provided to the computer of the financial institution and the detailed shopping information is transferred to the computer of the financial institution when the payment is made with the adjusting means.

In particular, prior to the transfer of detailed information, the collection propriety information indicating propriety of collection for the detailed shopping information is received from the computer of the financial institution and only when the collection propriety information is determined as YES, the detailed shopping information is transferred to the computer of the financial institution.

Moreover, the present invention includes a shop terminal which comprises a reading means for reading the account information of the customer from the storage medium carried by the customer, an input means for inputting the password of the customer and an output means. Thereby, the account information read from the storage medium is transferred to the computer of the financial institution and the detailed shopping information of the customer transferred from the computer of the financial institution in response to the account information is output from the output means.

Moreover, the present invention includes a shop terminal which comprises a reading means for reading the account information of the customer from the storage medium carried by the customer, an input means and an output means. Account information read from the storage medium is transferred to the computer of the financial institution, output of the detailed shopping information is requested to the computer of the financial institution based on the necessity or non-necessity of detailed shopping information input from the input means when it is provided from the computer of the financial institution in response to the account information that the detailed shopping information of the customer is stored in the computer of the financial institution, and the detailed shopping information of the customer transferred from the computer of the financial institution in response to the request is output from the output means.

Moreover, the present invention includes an information processor which comprises a storage means for storing account information of each customer and corresponding detailed information of shopping which was made by the customer in the past, a search means for searching the corresponding account information means based on the account identifying information transmitted from the connected shop terminal, and an identifying means for identifying whether or not the detailed information is stored in the storage means corresponding to the searched account information. Thus, when the detailed shopping information is stored in the storage means, the detailed information is transferred to the terminal from which the account identifying information is transferred.

Moreover. the present invention includes an information processor which comprises a storage means for storing account information of each customer and corresponding detailed information of shopping made by the same customer in the past, a searching means for searching the corresponding account information from the storage means based on the account information transmitted from the connected shop terminal and a storing means for storing the detailed shopping information transmitted from the shop terminal to the storage means corresponding to the searched account information.

Particularly, the storage means is given the information to indicate propriety of collection of detailed information and the searching means refers to the collection of propriety information at the time of searching the account information and then transmits the collection propriety information referred to the shop terminal prior to the reception of the detailed information.

Meanwhile, the present invention includes a settlement system which transmits detailed shopping information including the information for identifying shopping goods and price of goods to a financial institution and stores the detailed shopping information corresponding to the account from which the amount of shopping is drawn in the financial institution.

Particularly, the information of goods purchased within the predetermined period stored in each account in the financial institution is collected to generate the detailed shopping information and it is then provided to the account owner.

### BRIEF DESCRIPTION OF THE DRAWINGS

Fig. 1 is a diagram for explaining a settlement method of the digital cash system.

Fig. 2 is a diagram for explaining the account information stored in the host computer 10 of the bank.

Fig. 3 is a diagram for explaining the process sequence between the host computers of the hank and the shop (10. 12) at the time of making the shopping and collecting the shopping information.

Figs. 4(a) - 4(e) are diagrams illustrating messages transmitted from the host computers of the shop and the bank (10, 12) at the time of making the shopping and collecting the shopping information.

Fig. 5 is a diagram illustrating the process sequence of POS terminal 16 at the time of making the shopping and collecting the shopping information.

Fig. 6 is a diagram illustrating the continuing process sequence of POS terminal 16 at the time of performing the shopping and collecting the shopping information.

Fig. 7 is a diagram illustrating the continuing process sequence of POS terminal 16 at the time of making the shopping and collecting the shopping information.

Fig. 8 is a diagram illustrating the process sequence of the host computer 10 of the bank at the time of making the shopping and collecting the shopping information.

Fig. 9 is a diagram illustrating the continuing process sequence of the host computer 10 of the bank at the time of performing the shopping and collecting the shopping information.

Fig. 10 is a diagram illustrating the continuing process sequence of the host computer 10 of the bank at the time of performing the shopping and collecting the shopping information.

Fig. 11 is a diagram illustrating a pin-pad 18.

Figs 12(a) and 12(b) are diagrams illustrating a display example when the pin-pad 18 is used.

Fig. 13 is a diagram illustrating the sequence between the host computers of the shop and the bank (12, 10) at the time of requesting output of the shopping information.

Figs. 14(a) - 14(c) are diagrams illustrating a message transmitted from the host computers of the shop and the bank (12, 10) at the time of outputting the shopping information.

Fig. 15 is a diagram illustrating the process sequence of the host computer 12 of the shop at the time of outputting the shopping information.

Fig. 16 is a diagram illustrating the continuing process sequence of the host computer 12 of the shop at the time of outputting the shopping information.

Fig. 17 is a diagram illustrating the process sequence of the host computer 10 of the bank at the time of outputting the shopping information.

Fig. 18 is a diagram for explaining the sequence between the host computer 10 of the bank and the ATM 40 at the time of outputting the shopping information utilizing the ATM 40.

Fig. 19 is a diagram for explaining the process sequence of the host computer 10 of the bank at the time of outputting the shopping list in every constant period.

Fig. 20 is a diagram for explaining the process sequence of the host computer 10 of the bank of utilizing direct-mail.

Fig. 21 is a diagram for explaining the process sequence of the host computer 10 of the bank of utilizing a facsimile.

Fig. 22 is a diagram illustrating the flow of information of the system as a whole.

### DESCRIPTION OF THE PREFERRED EMBODIMENTS

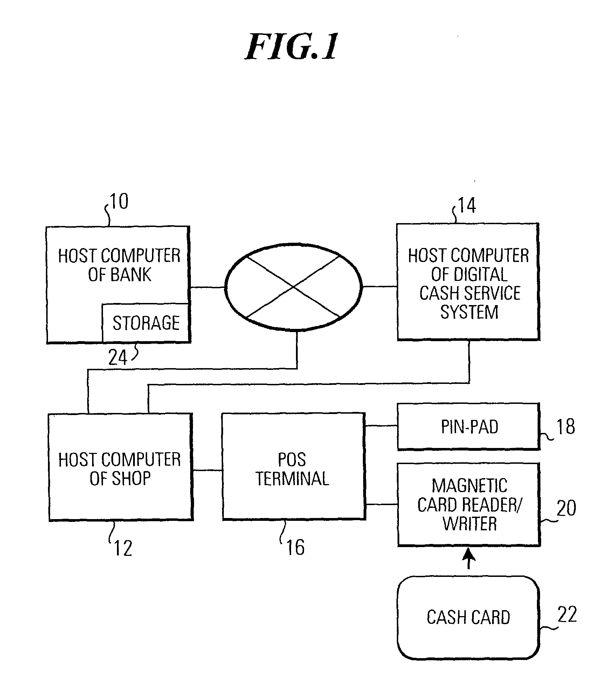

Fig. 1 is a diagram illustrating a system structure of the cash card type digital cash system to which a preferred embodiment of the present invention is directed.

In a cash card type digital cash (hereinafter referred to only as a digital cash) system, a host computer 10 of the financial institution, such as a bank or the like (hereinafter referred to only as "bank"), in which a user of digital cash system has the account, a host computer 12 of a shop in which a customer shops, and a host computer 14 of a provider which offers the digital cash system service are mutually connected through a network. In the example shown in Fig. 1, the shop host computer 12 and the host computer 14 of the digital cash system service are directly connected without going through a network, but the present invention is not limited to such structure.

Moreover, a shop (not shown) is provided with a known POS terminal 16 which is connected to the host computer 12 of the shop. The POS terminal 16 is installed in a single unit or multiple units depending on the size of the shop. This POS terminal 16 is connected with a pin-pad 18 with which a user of the digital cash system inputs the password and a card reader 20 for reading the cash card 22 carried by the customer. A magnetic card reader is used in Fig. 1 because a magnetic card is often used as the cash card 22, but it is also possible to use, in addition, a card reader for reading an IC card (contact type/non-contact type, not shown) or other various kinds of information readers. Moreover, it is also possible to introduce the structure when the POS terminal 16 is directly connected to the network without providing the host computer 12 of the shop.

Next, the basic method of settlement for an amount of shopping in the digital cash system will be explained with reference to Fig. 1. At the time of settlement in the digital cash system, the necessary information is read from the cash card 22 carried by a customer using a magnetic card reader 20 connected to the POS terminal 16 and the amount of shopping is drawn from the bank account registered in the card.

In the cash card 22, the information for identifying the bank account of a customer is usually recorded. An account number is an example of such information. The account identifying information read from the card reader 20 (referred to as "account number" in the following explanation) is sent to the host computers of the shop (12) and digital cash service provider (14) through the POS terminal 16. Therefore, access is made to the host computer 10 of a bank to which customers' account numbers are registered through these host computers 12, 14.

The account information of the customer is recorded in the host computer 10 of a bank. The host computer 14 of the digital cash service provider requests to draw the amount of the shopping of the customer to the host computer 10 of the bank. Meanwhile, the host computer 10 of the bank subtracts the amount of shopping from the account of the customer and provides it to the host computer 14 of the digital cash service system.

The money corresponding to the amount of shopping subtracted from the account of the customer is deposited to the account of the shop through the digital cash service. The account number of the shop is stored corresponding to the information for identifying the shop, for example, in the host computer 14 of the digital cash service provider. Therefore, the host computer 14 of the digital cash service provider can make access to the host computer 10 of the bank as the destination of deposition with reference to such information. In this case, the bank/financial institution in which a shop has the account, is not always same as the bank in which the customer has the account.

When drawing the amount of shopping from the account of the customer, it is also possible for the host computer 12 of the shop to conduct a direct process to the host computer 10 of the bank without going through the host computer 14 of the digital cash service provider.

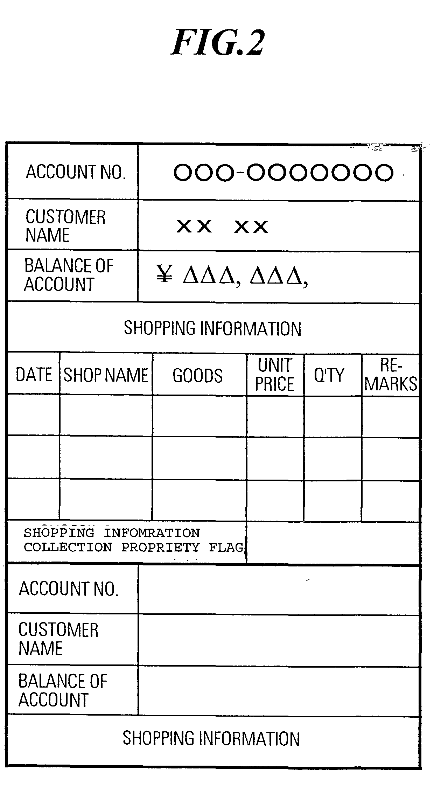

The host computer 10 of the bank is provided with a storage device 24 for storing the account information of each customer. Fig. 2 is a diagram for explaining the account information stored in the storage device 24 of the host computer of the bank. Within the storage device 24, the account information storing area is defined and the inside of this area is further divided for each account. Only the items of Fig. 2 will be explained but the information other than that indicated in Fig. 2 may be stored in the account information storing area and, moreover, it is also possible to delete a portion of the items indicated in Fig. 2.

The account information of each customer corresponds to the account number of the account on a one-to-one basis. As the account information, the information for identifying the customer ("customer name" in the example of Fig. 2) and the balance information of the account are recorded.

Moreover, in this embodiment, the area for recording the shopping information generated when the customer having the account shops using the cash card type digital cash service system is set within the account information storing area. An example of recording the shopping information is illustrated in Fig. 2. Here, the date of shopping of the customer, the name of the shop, the name of the goods, the unit price of the goods, the number of the goods and reference information (amount of tax or the like) are recorded. Naturally, it is also possible to record other pieces of information required in addition to the above data. Moreover, a portion of the information of Fig. 2 may also be omitted.

Moreover, in the shopping information area of Fig. 2. a shopping information collection propriety flag is also set, and will be explained later in detail.

When a user shops with the cash card type digital cash system, access is made every time for the payment with the adjusting device in order to execute the processes such as reference to the account information and to update the balance. This embodiment is directed to such operations and introduces a structure in which the shopping information is sent to the host computer 10 of the bank from the shop when access is made to the host computer 10 of the bank at the time of shopping and the shopping information stored in the host computer 10 of the bank is output to the customer as required.

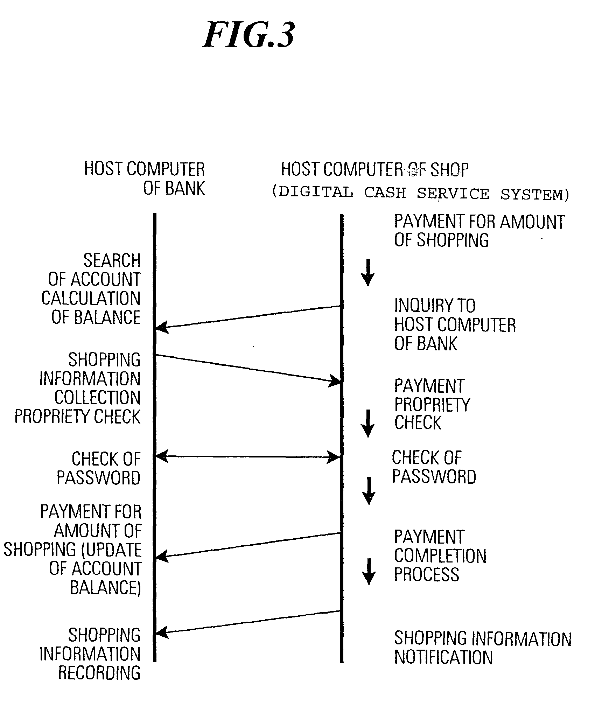

Fig. 3 illustrates the processing sequence between the host computers of the bank (10) and the shop/digital cash service provider (14). In Fig. 3, the host computer 12 of the shop is assumed to include operation of the POS terminal 16. Moreover, since the host computers of the shop (10) and the digital cash service provider (14) are assumed to be integrated from the side of the host computer 10 of the bank, these host computers are referred to as only the host computer 12 of the shop.

The host computer 12 of the shop executes the process of payment for the amount of shopping, such as the POS system in the related art. In this case, when the customer selects payment with the digital cash system, the host computer 12 of the shop inquires about the propriety of payment with the digital cash system to the host computer of the bank 10.

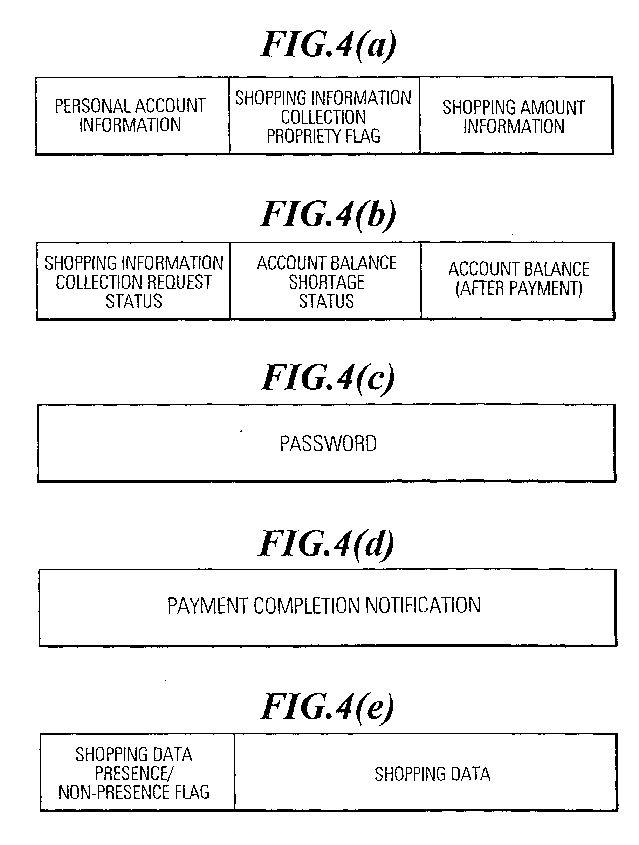

Fig. 4(a) schematically illustrates a message transferred to the host computer of the bank from the host computer of the shop. When the customer selects the payment with the digital cash system, the account information recorded in the cash card of the customer is read using the card reader/writer installed in the shop. The account information obtained is added to the message of Fig. 4(a).

Moreover, the shopping information collection propriety flag is set in the message of Fig. 4(a), and this shopping information collection propriety flag is set to ON when the customer requests output of the shopping information stored in the host computer 10 of the bank and is set to OFF for other situations.

When setting the shopping information collection propriety flag, a customer is previously requested to register that the customer either desires or does not desire the collection of shopping information with the host computer 10 of the bank. When the customer desires collection of the shopping information, the shopping information collection propriety flag is set to ON, and when the customer does not desire collection of the shopping information, the shopping information collection propriety flag is set to OFF. Since it is assumed that the customer does not request output of the shopping information list, the shopping information collection propriety flag is assumed to be OFF.

Moreover, the shopping amount information is recorded in the message of Fig. 4(a). This information indicates the amount of money for shopping calculated.

The host computer 10 of the bank searches the account of the customer based on the account information in response to reception of a message of Fig. 4(a) and subsequently calculates the balance of the account. In this case, in order to determine whether or not payment with the digital cash system is possible, the host computer 10 of the bank compares the amount of shopping transmitted by the message of Fig. 4(a) with the current balance of the account. Moreover, the computer refers to the shopping information collection propriety flag in the message transmitted to determine whether or not the customer desires output of the shopping information.

When the host computer 10 of the bank confirms the items explained above, it transmits a message to the host computer of the shop to send the result. Fig. 4(b) illustrates a message transmitted to the host computer 12 of the shop. In the leading area of the message of Fig. 4(b), the shopping information collection request status is set. This is the shopping information collection request status preset in the account information itself and this status notifies the host computer 12 of the shop whether or not the customer desires the collection of shopping information with the host computer 10 of the bank.

Moreover, the account balance shortage status is also set in the message of Fig. 4(b). This status is used to notify whether or not the account balance is short or not, in other words, to notify the host computer 12 of the shop, the propriety of payment with the digital cash system from the host computer 10 of the bank.

Moreover, the account balance information is recorded in the message of Fig. 4(b) in order to notify the customer staying in the shop the balance of the account after payment for shopping is adjusted. Therefore, the customer can determine whether payment with the digital cash system can be made or must be stopped, and if the balance in the account is less than the balance assumed, the customer can stop the shopping and payment.

Subsequently, the host computer 12 of the shop checks the propriety of payment for the amount of shopping on the basis of the response from the host computer 10 of the bank. When payment with the digital cash system is possible, the password is confirmed between the host computers of both shop (12) and bank (10). Particularly speaking, the following processes are executed. Namely, the customer inputs the password of the cash card 22 from the pin-pad 18 provided in the shop. This password is transferred (refer to Fig. 4(c)) to the host computer 10 of the bank and is then authenticated. Thereafter, the result of authentication is transferred to the host computer 12 of the shop.

After the password is confirmed, the host computer 12 of the shop,executes the process to complete the payment or adjustment for the amount of shopping and transmits, to the host computer 10 of the bank, the shopping information adjustment completion message (refer to Fig. 4(d)) to notify the end of payment. Receiving this message, the host computer 10 of the bank performs adjustment (payment) for the amount of shopping. Practically speaking, the amount of shopping is drawn from the bank account of the customer and the balance of the account is updated. Simultaneously, the amount of shopping is deposited to the account of the shop.

Subsequently, when it is detected by making reference to the shopping information collection request status in the message of Fig. 4(b) that the customer desires collection of the shopping information. the shopping information of the customer generated this time is transferred to the host computer of the bank from the host computer of the shop.

Fig. 4(e) illustrates a message of shopping information. In this message, a shopping data presence/non-presence flag is set first to indicate whether or not the shopping data is present. Since the shopping data exists after the customer has shopped, the shopping data presence/non-presence flag becomes ON. Subsequently, the shopping data is added to the message. In this data, the name of the shop, the goods purchased and the price or the like are recorded.

The host computer 10 of the bank records the shopping information transferred to the shopping information recording area preset in the account information area of the customer and then completes the process.

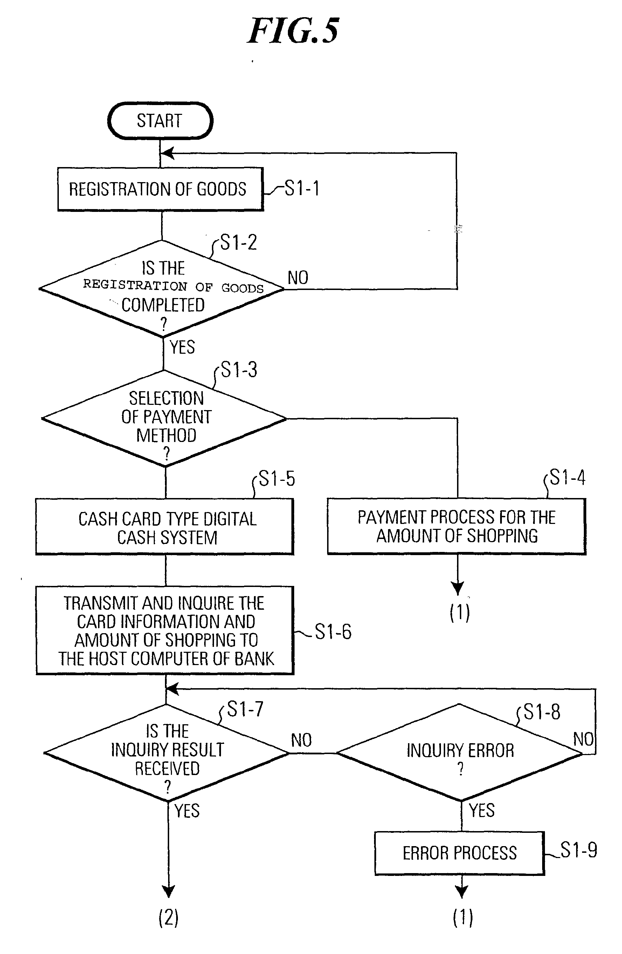

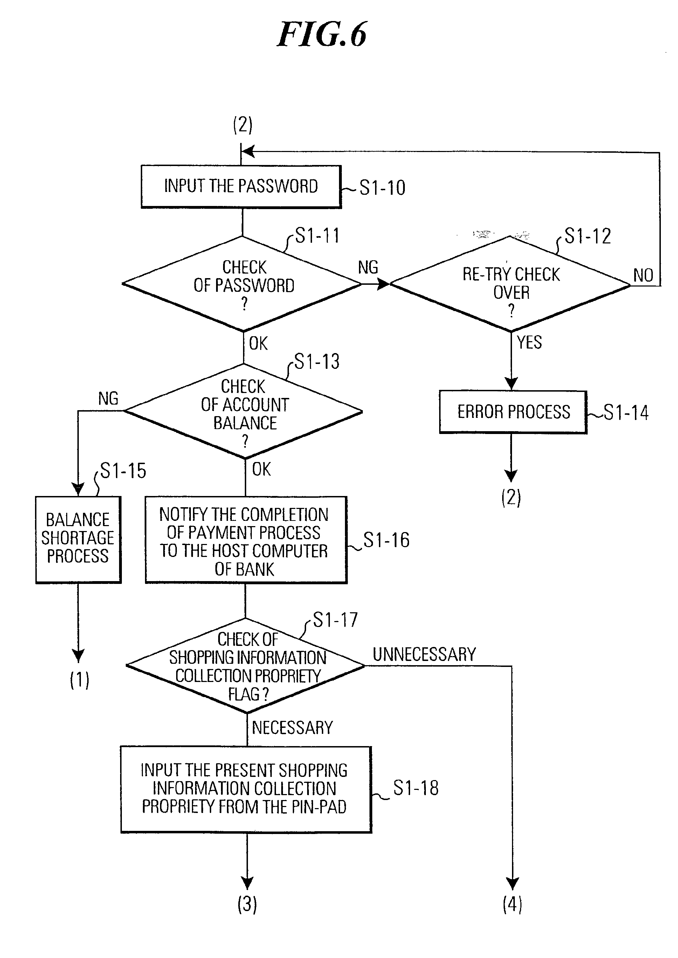

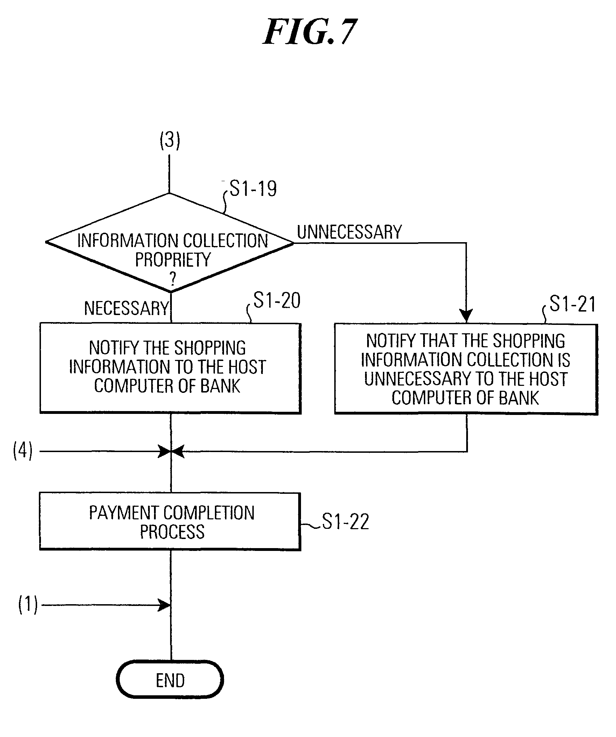

Figs. 5 to 7 are flowcharts for explaining further detailed operations of the POS terminal 16 and host computer 12 of the shop (host computer of digital cash system center) for executing the processes explained above. In the following explanation, the term "POS terminal 16" is used.

First, when a customer shops, goods are registered using the POS terminal 16 (S1-1). This process is similar to the process executed in the POS system of the related art. When all goods to be purchased by the customer are registered (S1-2), a shop clerk queries a customer as to the method of payment (S 1-3). When the customer desires payment with the cash card type digital cash system, that is, other than with actual cash or credit card, payment for the amount of shopping is executed depending on the designated method of payment (S1-4).

Meanwhile, when the customer selects the payment with the cash card type digital cash system, the cash card information is read using a card reader/writer 20 contained in the POS terminal 16 (S1-5) and a message illustrated in Fig. 4(a) is generated to query the card information and amount of shopping to the host computer 10 of the bank (S1-6). The POS terminal 16 monitors reception of result of the inquiry from the host computer 10 of the bank (S1-7).

When it is determined that an inquiry error is generated as a result of monitoring for inquiry (S1-8), an error process is executed (S1-9) to complete the process. Generation of inquiry error can be determined from the conditions such as no reception of response message from the host computer 10 of the bank within the predetermined period after transmission of message to the host computer 10 of bank.

On the other hand, when the inquiry result is received from the host computer 10 of the bank within the predetermined period, the customer is requested to input the password from the pin-pad 18 provided on the POS terminal 16 (S1-10). The password is checked (S1-11) and if the password is not correct, the customer is again requested to input the password.

When a cash card 22 is used, if an incorrect password is input for a predetermined number of times (e.g., three), an error process is executed. The present embodiment also determines, if the password is incorrect, whether or not an incorrect input has been made for the predetermined number of times (retry-check over) in the same manner (S1-12). If the retry-check over occurs, the error process is executed (S1-14) to complete the process.

When the correct password is input, the account balance is checked on the basis of the response from the host computer of the bank (S1-13). When the balance of the account is insufficient (payment for amount of shopping is impossible), the balance shortage process (S1-15) to complete the process. In this case, the customer can change the method of payment to another method.

Meanwhile, when the balance of the account is determined sufficient for payment for the amount of shopping, the payment process completion is notified to the host computer 10 of the bank (S 1-16). Subsequently, the POS terminal 16 checks the shopping information collection propriety flag based on the contents of the message received from the host computer 10 of the bank. If shopping information collection is unnecessary, the payment completion process is executed (S1-22) to complete the process.

On the other hand. when the shopping information collection is necessary. the customer is requested to input the shopping information collection propriety of the current shopping using the pin-pad 18 in order to confirm the will of the customer (S1-18). Thereby, it is possible for the customer who normally desires shopping information collection to stop the transferring of shopping information to the host computer 10 of the bank as required.

When the shopping information collection is necessary, the shopping information generated by the present shopping is provided to the host computer 10 of the bank (81-20). Meanwhile, when the shopping information collection is unnecessary, it is provided to the host computer of the bank (S1-21). In any case, the payment completion process is executed (S1-22) to complete the process.

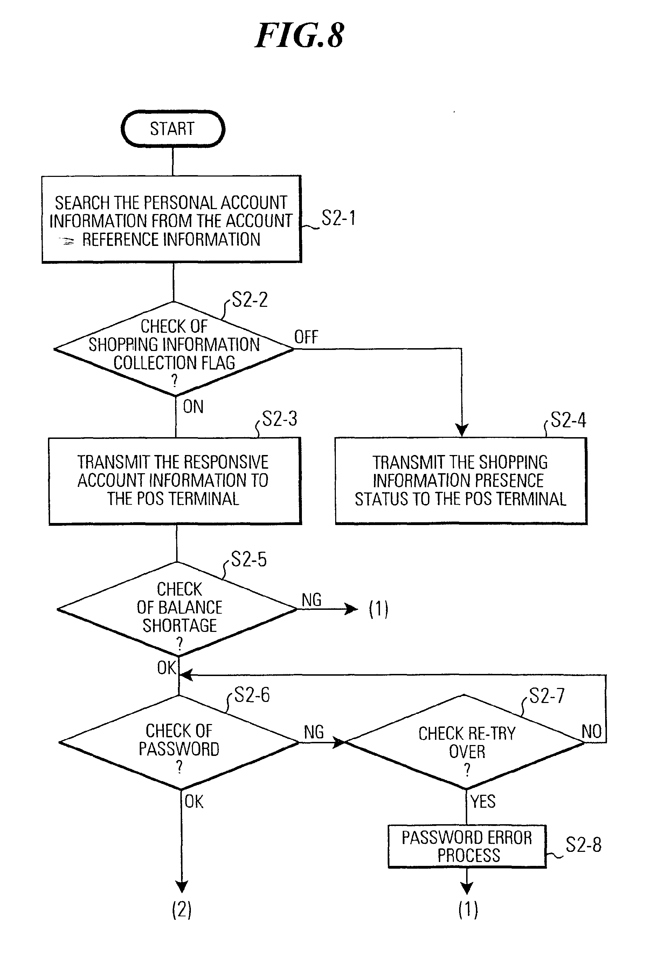

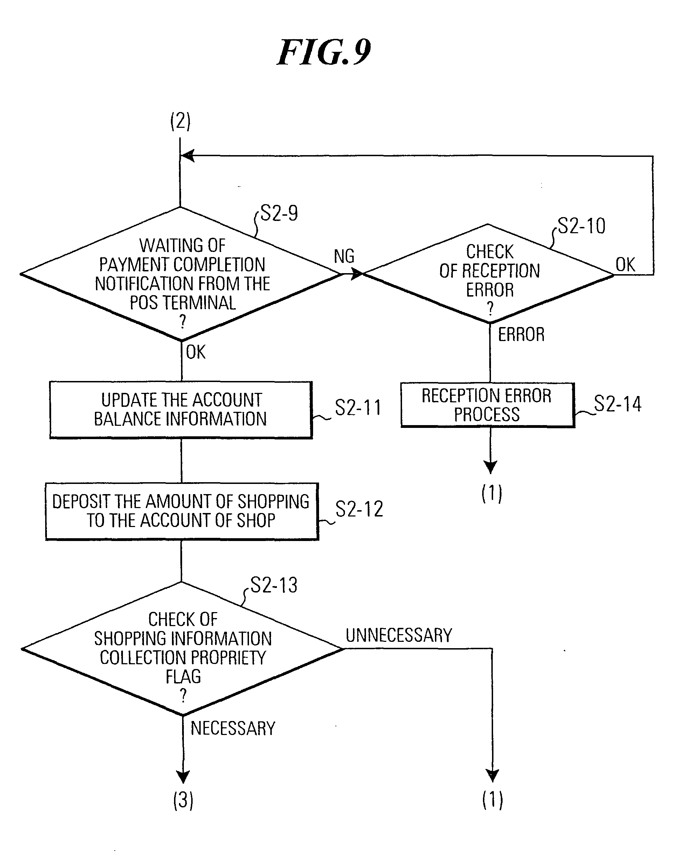

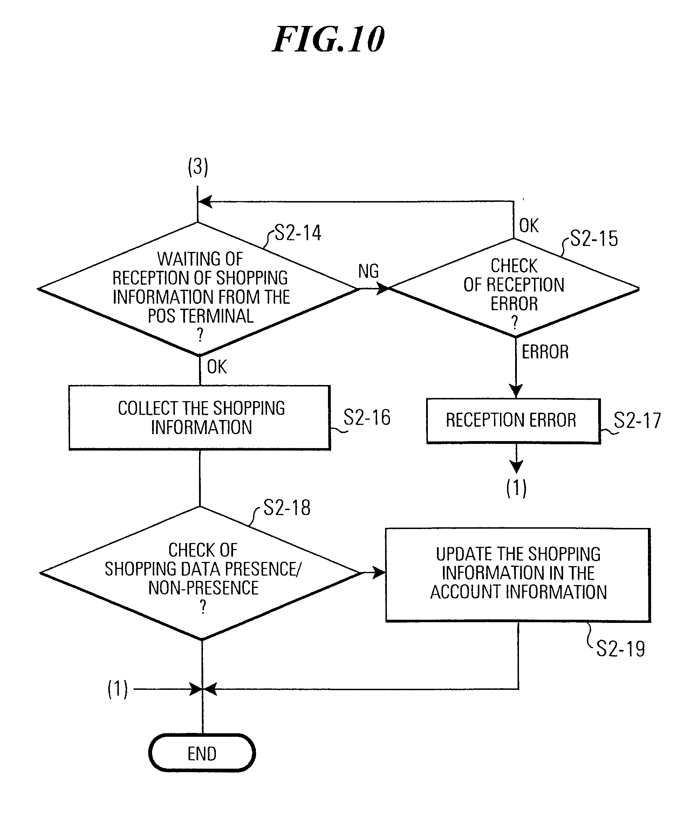

Fig. 8 to Fig. 10 are diagrams to explain the further detailed operations of host computer 10 of the bank.

First, when the message illustrated in Fig. 4(a) is received from the host computer 12 of the shop, the account information is extracted from the message to search the personal account information (S2-1). Subsequently, the shopping information collection propriety flag is checked from the account information (S2-2). When the shopping information collection propriety flag is OFF, the shopping information presence status is transmitted to the POS terminal. In this case, non-necessity of shopping information collection is notified.

Meanwhile. when the shopping information collection propriety flag is ON, the message illustrated in Fig. 4(b) is transmitted to the POS terminal 16 (S2-3). Thereafter, a shortage of balance of the account is checked (S2-5). If the balance is insufficient, the process is completed.

On the other hand, when the balance is sufficient, the password is received from the POS terminal 16. Upon reception of the password from the POS terminal 16. this password is checked (S2-6). If the password is incorrect, check-retry is performed. In this case, check-retry over is checked (S2-7). If check-retry over occurs, the password error process is executed (S2-8) to complete the process.

When the password is correct. the payment completion message is transmitted from the POS terminal 16 (S2-9). Thereafter, the reception error check is performed (S2-10). If the reception error is generated, the reception error process (S2-14) is executed to complete the process. The reception error can be determined depending on reception or non-reception of the payment completion message from the POS terminal 16 within the predetermined period.

When the payment completion message is received from the POS terminal 16, the host computer 10 of the bank updates the balance of the account by subtracting the amount of shopping from the account balance information (S2-11) and then executes the process to deposit an amount of money corresponding to the amount of shopping to the account of the shop (S2-12).

Subsequently, the host computer 10 of the bank checks the shopping information collection propriety flag from the message (Fig. 4(a)) received from the POS terminal 16. If collection is unnecessary, the process is completed. Meanwhile, if collection of shopping information is necessary, the shopping information is received from the POS terminal 16 (S2-14). When the reception error is determined by monitoring the reception of shopping information (S2-15), the reception error process is executed (S2-17) to complete the process.

Moreover, when the shopping information is received from the POS terminal 16 within the predetermined period, the shopping information is collected (S2-16) and the presence of shopping data in the message received from the POS terminal 16 is checked (S2-18). When the shopping information exists, the shopping information in the account information is updated based on the shopping information received (S2-19) to complete the process.

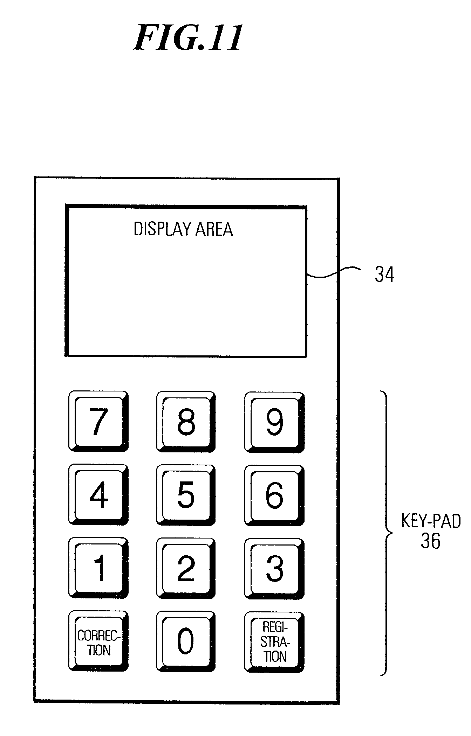

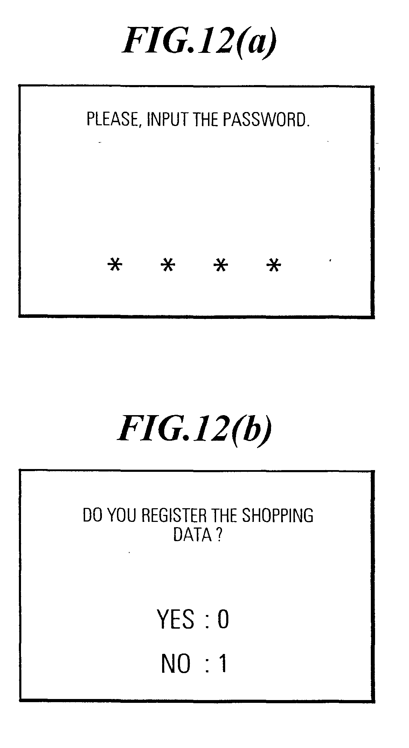

Fig. 11 schematically illustrates the external appearance of the pin-pad 18. The pin-pad 18 is provided with a display unit 34 and a key-pad 36. Fig. 12a illustrates the contents displayed on the display unit 34 at the time of inputting the password. In this case, a message "Please, input the password" is displayed and an asterisk is displayed at the corresponding digit position for each input of the password. On the other hand, Fig. 12b illustrates the contents displayed when the customer is requested to confirm the collection of shopping data. In this case, a message "Do you request registration of shopping data?" is displayed and simultaneously the items to be input are also displayed. When the customer desires registration of shopping data, the customer is requested to input "0" in response to the display of "YES: 0". On the other hand, when the customer does not desire registration of shopping data, the customer is requested to input "1" in response to the display of "NO: 1".

The information to be transferred to the host computer 10 of the bank from the POS terminal 16 as the shopping data may be determined adequately as required but when it is used as the shopping history information, it will be preferable that this information includes at least the information for identifying the goods purchased, the price information and information of the shopping date and time.

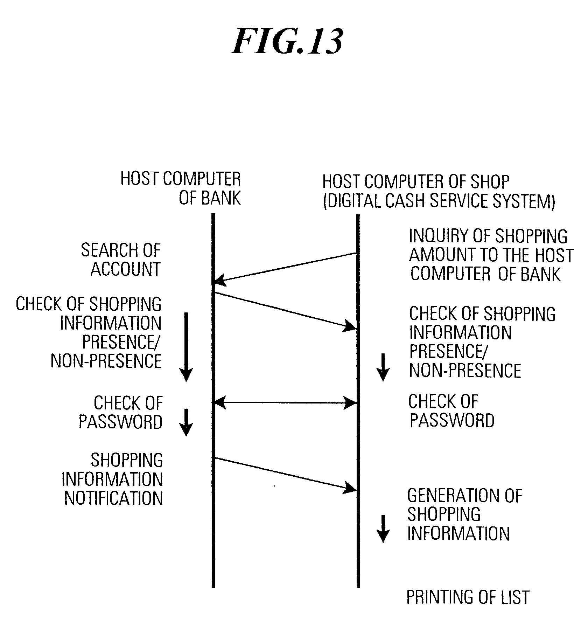

Fig. 13 illustrates the process sequence of the host computers of the shop and the bank (12, 10) in the case that the customer desires output of the shopping information list stored in the host computer 10 of the bank through the POS terminal 16. Here, an example of output of the shopping information from the POS terminal 16 will be explained, but the output destination of the shopping information will never be limited, as the details will be explained later, to the POS terminal 16.

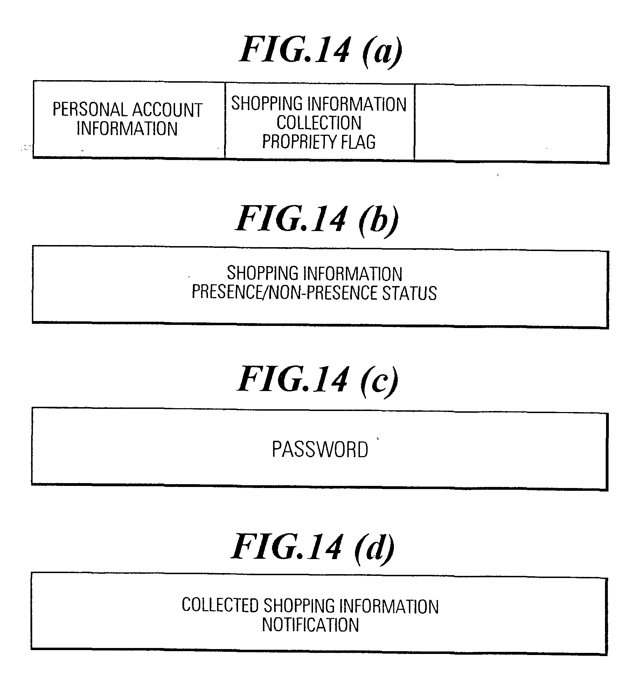

When the customer desires output of the shopping information list at the shop, the POS terminal 16 inquires the amount of shopping to the host computer 10 of the bank. In this case, a message illustrated in Fig. 14(a) is transferred to the host computer 12 of the shop to the host computer 10 of the bank. This message is almost identical in format to the message of Fig. 4(a), except that the information about the amount of shopping is not included.

Upon reception of the message of Fig. 14(a), the host computer 10 of the bank extracts the account number from the message received and then searches the account information based on this account number. The host computer 10 of the bank determines the propriety of output of shopping information by confirming that the shopping information collection propriety flag is ON. Subsequently, the host computer of the bank determines whether or not the shopping information exists based on reference to the account information. When the customer does not desire the collection of shopping information, both the account information and shopping information are not recorded. In this case, it is determined that the shopping information does not exist. Meanwhile, when the customer is collecting the shopping information and the shopping information which is not yet output exists in the account information. the host computer 10 of the bank determines that the shopping information exists.

In this embodiment, the shopping information which is once output should be determined as deleted from the account information. Moreover, it is also possible that the shopping information being stored is deleted in such a method that shopping information is stored only during the particular period or when the particular instruction is issued. When there is no particular problem in the capacity of the storage device, all shopping information pieces may be stored. When the shopping information which is once output is requested to be stored continuously, the same shopping information is never output repeatedly by setting the flag which indicates that the shopping information has been output or not.

After checking the presence of the shopping information, the host computer 10 of the bank transfers the result of the check to the POS terminal 16.

The host computer 10 of the bank generates a message illustrated in Fig. 14(b) in order to notify the result of shopping information presence check to the host computer 12 of the shop. In this message, the shopping information presence status is set but when the shopping information exists in the account information area, the shopping information presence is set in the message. The host computer 12 of the shop refers to this shopping information presence status to determine whether or not the shopping information is stored in the host computer 10 of the bank. When the shopping information exists, the customer is requested to input the password using the pin-pad 18 in the POS terminal 16 and then this password is then transferred to the host computer 10 of the bank (message format is illustrated in Fig. 14(c)). This password is verified in the host computers of both the shop and the bank (12, 10).

When the password is verified, the host computer 10 of the bank generates a message (refer to Fig. 14(d)) to notify the collected shopping information and then transfers this message to the host computer 12 of the shop. The POS terminal 16 executes the edit/generation process of the shopping information list by receiving this message and thereby the shopping information can be printed out from a printer (not shown) installed for the POS terminal 16.

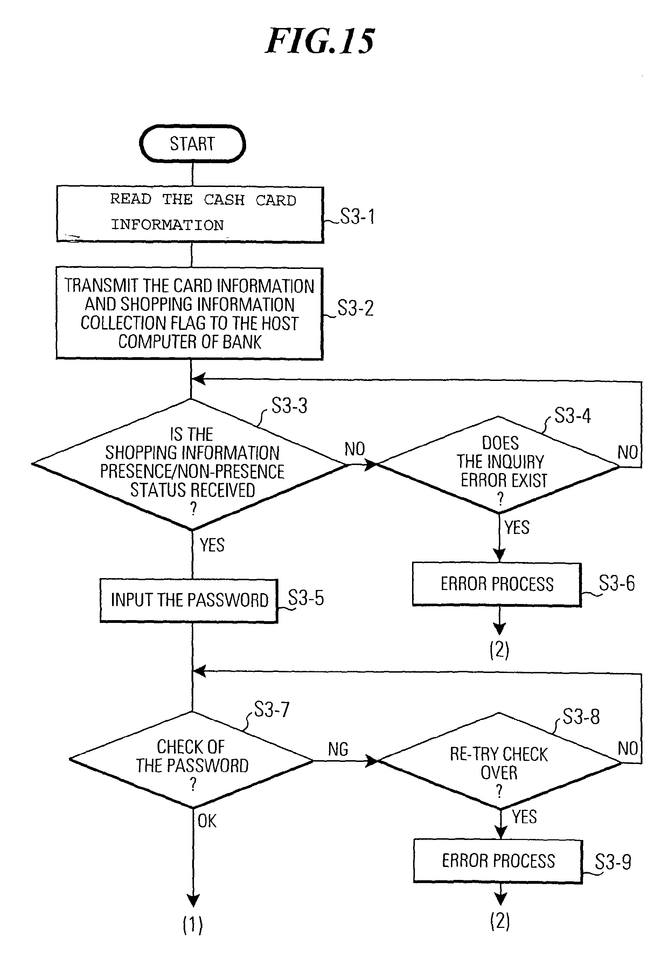

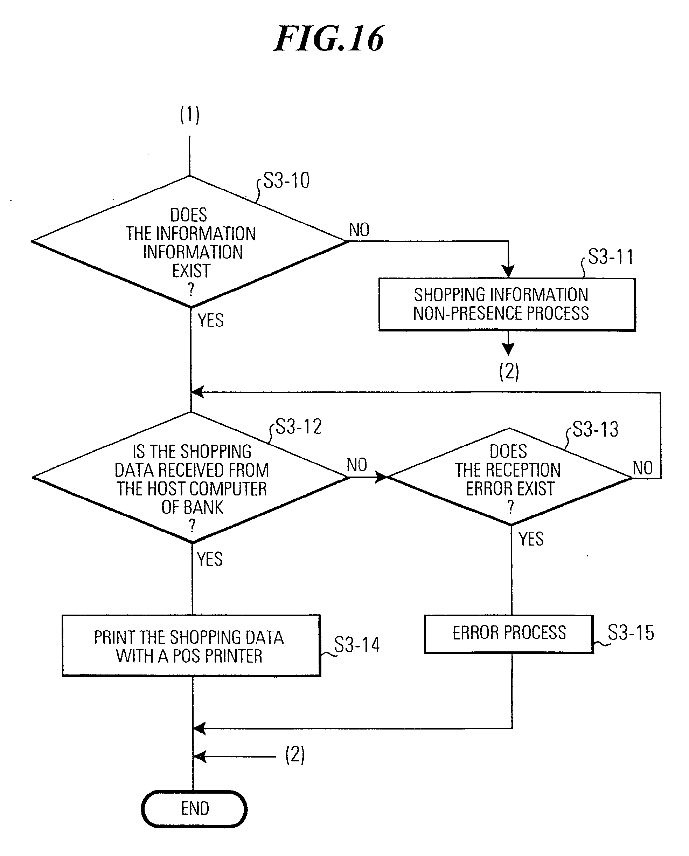

Fig. 15 and Fig. 16 are diagrams for explaining detailed operations of the host computer 12 of the shop/POS terminal 16 when the processes explained above are executed. In the following explanation, the above apparatus is referred to only as a "POS terminal 16".

When the customer desires output of the shopping information list, the card reader/writer 20 contained in the POS terminal 16 reads the information of the cash card carried by the customer (S3-1). Thereby, the account information of customer is read from the cash card 22. Subsequently, the POS terminal 16 generates a message illustrated in Fig. 14(a) including the account information and shopping information collection propriety flag and then transmits this message to the host computer 10 of the bank for the purpose of inquiry (S3-2).

Next, the POS terminal 16 monitors whether or not the shopping information presence status is received from the host computer 10 of the bank (S3-3). If the shopping information presence status is not received from the host computer 10 of the bank within the predetermined period, it is determined that an inquiry error is generated (S3-4) and the error process is executed (S3-6) to complete the process.

Meanwhile, when the shopping information presence status is received from the host computer 10 of the bank, the customer is requested to input the password (S3-5). This password is then transferred to the host computer 10 of the bank and is then checked (S3-7). When the retry-check over of the password occurs (S3-8), the error process is executed (S3-9) to complete the process.

On the other hand, when the password check OK is received from the host computer 10 of the bank within a predetermined period after transmission of message, it is determined whether or not the shopping information exists (S3-10). This is identical to the determination of whether or not the shopping information exists in the bank. But, if there is no shopping information in the bank, the shopping information non-presence process is executed (S3 - 11 to complete the process.

Meanwhile, when the shopping information exists, monitoring for reception of shopping information from the host computer 10 of the bank is started (S3-12). If the shopping information is not received within the predetermined period, it is determined that a reception error has occurred (S3-13) and the error process is executed (S3-15) to complete the process.

When the shopping information is received from the host computer 10 of the bank, the shopping data is printed with a POS printer (S3-14) (not shown). Since the POS terminal 16 is provided with a printer for printing a receipt, this printer may suitably be used for printing of the shopping information list.

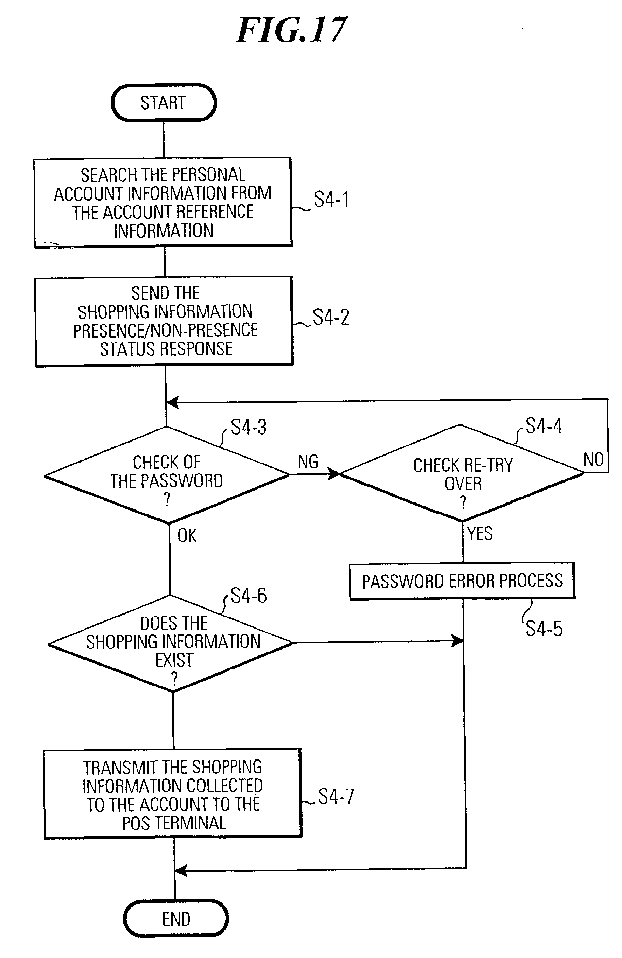

Fig. 17 is a flowchart for explaining detailed processes in the host computer 10 of the bank.

Upon reception of the message illustrated in Fig. 14(a), the host computer 10 of the bank extracts the account information from the message and searches the corresponding account information (S4-1). The computer 10 also determines whether or not both account information and shopping information exist and sends the response of shopping information presence status to the POS terminal 16 (S4-2).

Thereafter, the password input from the POS terminal is checked (S4-3). When the password is incorrect, the error process is executed (S4-4, S4-5) to complete the process.

When the password is correct. it is verified whether or not the shopping information is accumulated in the account information area (S4-6). When the shopping information exists, the shopping information collected in the host computer 10 of the bank is transmitted to the POS terminal 16 (S4-7) to complete the process.

In the embodiment explained above, an example of the printing output of shopping information using the POS terminal 16 is explained and, moreover, it is also possible to employ the other embodiments.

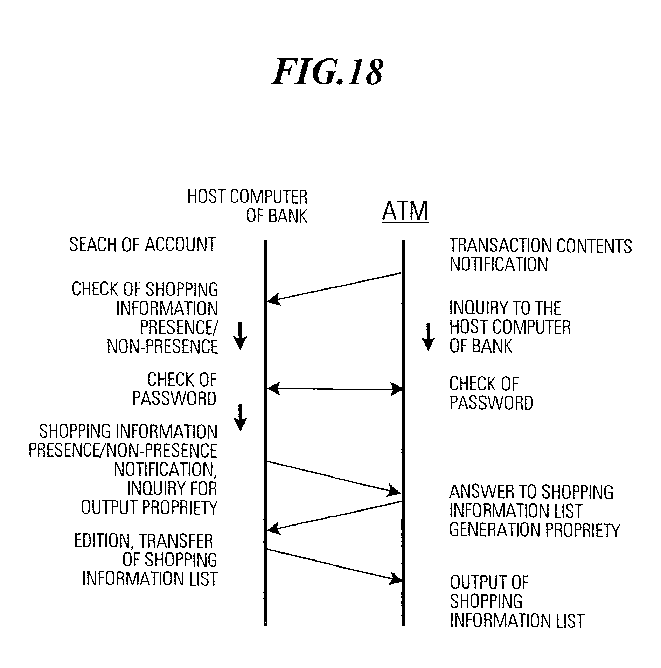

The host computer 10 of the bank is usually connected on an online basis with the ATM (Automatic Teller Machine) 40 installed in each branch of the bank. A customer of the bank uses ATM 40 for requesting a withdrawal or a deposit of cash. In this case, however, access is made to the host computer 10 of the bank. Moreover, the ATM 40 is also provided with a printer 42 for printing the data on the slip or on the bank note. In recent years, the ATM 40 which enables use of an IC card (not shown) has also been used. When considering the functions of such ATM 40, if the shopping information of the customer is accumulated in the host computer of the bank, it is also possible to output the shopping list when the customer utilizes the ATM 40. Fig. 18 is a diagram for explaining the process sequence between the ATM 40 and the host computer 10 of the bank at the time of outputting the shopping list using the ATM 40.

When the ATM 40 is used, the customer inserts his cash card 22 to the card reader 20 provided in the ATM 40. Thereby, the account number of the customer is read from the cash card 22 (a certain kind of the machine reads the account number of a bank statement or note). The account number of the customer is transferred to the host computer 10 of the bank together with transaction contents (drawing of cash or the like) selected by the customer for the purpose of inquiry.

The host computer 10 of the bank searches the account of the customer based on the received account number and executes the transaction process instructed by the customer. Depending on these processes, the host computer 10 of the bank checks whether or not the shopping information of the customer exists as the account information.

Thereafter, the password of the customer is input from the ATM 40 and the password is authenticated in the host computer 10 of the bank. When the password is correct, the transaction process is executed and the host computer 10 of the bank notifies the ATM 40, presence or absence of shopping information and also inquires thereto about the propriety of output of shopping information stored.

The ATM 40 displays, on a display unit (not shown), the image for asking the presence or absence of shopping information and the propriety of output of shopping information to the customer, based on the notification for presence or absence of shopping information and inquiry about the propriety of output of shopping information from the host computer 10 of the bank. When the shopping information is stored in the host computer 10 of the bank, the customer sends the answer to propriety for generation of shopping information list to the host computer 10 of the bank through the ATM 40. When the customer sends the answer to generate the shopping information list, the host computer 10 of the bank edits the shopping information list responding to such answer and then transfers this list to the ATM 40.

The ATM 40 outputs the received shopping information list using, for example, a printer 42. Various methods can be applied to the output format. For example. data is printed in the same manner as a slip, data is printed with the printer for the bank statement or note in the same format as the bank note (or a small book for shopping list) or data of shopping information list is written to the storage medium, such as an IC card, carried by the customer.

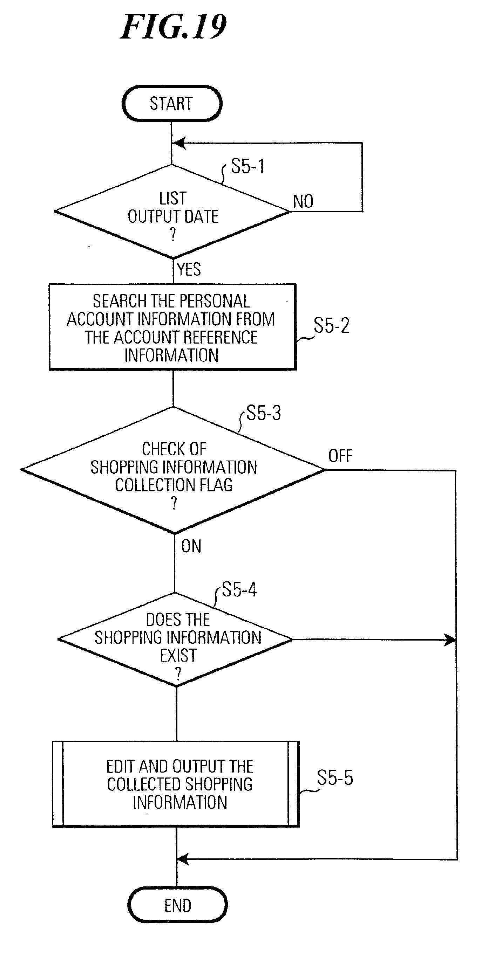

Moreover, information items such as the address and telephone number of the customer, are recorded in the host computer of the bank. It is also possible to send the shopping information once in every constant period to the customers, for example, using this information. Fig. 19 is a flowchart for explaining the process sequence in the host computer 10 of the bank in this example.

The host computer 10 of the bank determines first whether or not the list output date has come (S5-1). The list output date may be set individually for the customer or it may also be set at a time for all customers.

When the list output date is determined, the personal account information is searched from the account information (S5-2) and the shopping information collection propriety flag in the personal account information is checked (S5-3). When the customer does not desire collection of shopping information, the shopping information collection propriety flag is set to OFF. Therefore, the host computer 10 of the bank completes the process and then executes a similar process for the next account.

Meanwhile, when the customer desires collection of shopping information, the shopping information collection propriety flag is set to ON. In this case, the host computer 10 of the bank checks whether or not the shopping information exists in the account information (S5-4). If the shopping information does not exist, the process is completed, but when the shopping information exists, the collected shopping information is edited and output (S5-5).

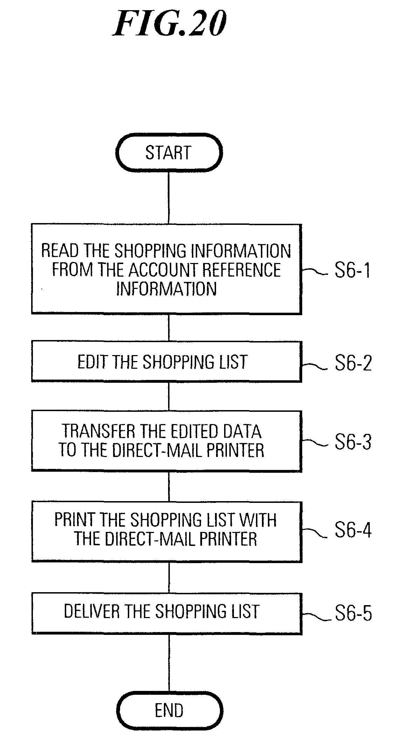

Fig. 20 is a flowchart for explaining in further detail the process of S5-5 of Fig. 19. Here, an example of sending the shopping list to the customers with direct-mail is assumed.

On the occasion of collecting the shopping information, the shopping information is read from the account referring information (S6-1). Subsequently, the shopping list is edited (S6-2) and the edited data is transferred to the direct-mail printer 44 (S6-3). In this case, the information required to deliver the shopping list including name and address of customers is also edited and transferred.

Subsequently, the shopping list is printed (S6-4) using the direct-mail printer 44 and the shopping list is delivered (S6-5).

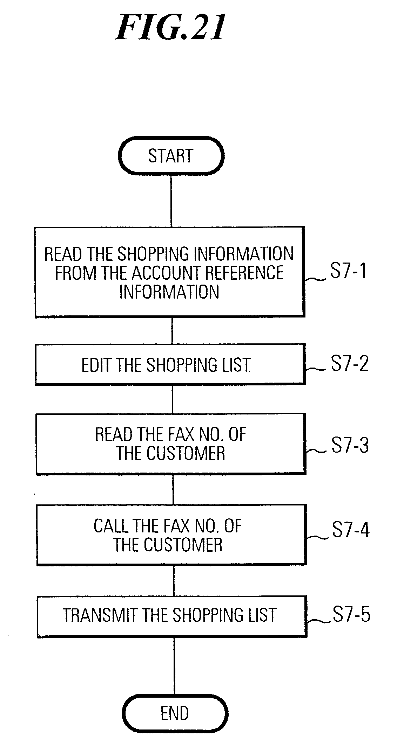

Fig. 21 illustrates another example in which the shopping list is transmitted to the customer facsimile (not shown).

S7-1 and S7-2 are identical to those in Fig. 20 and therefore the same explanation is omitted here. When the shopping list is edited, the facsimile number of customer is read from a database (S7-3) and a call is issued to the facsimile number of customer (S7-4) to send the shopping list (S7-5).

Moreover, another method, for example, transmission of the shopping list to the customer with an electronic mail. can be introduced. In this case, the "facsimile number" is changed to "electronic mail address" in Fig. 21.

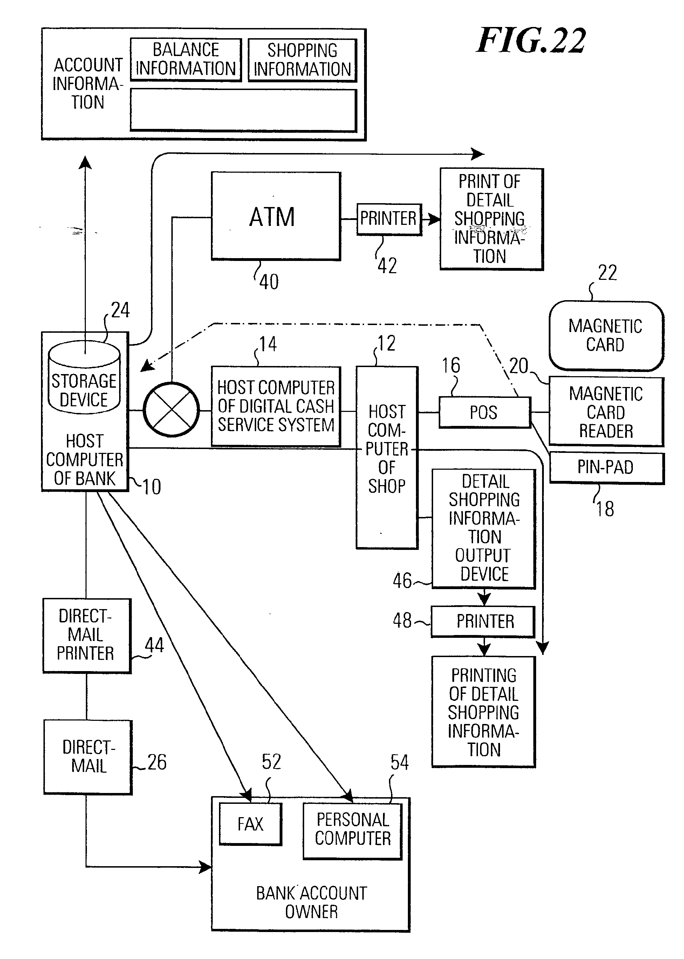

Fig. 22 is a diagram for explaining each structural element and information flow in this embodiment.

The route for transferring the detailed shopping information to the host computer 10 of the bank is indicated by the arrow mark of dotted line in the figure. In this case, the information in the magnetic card 22 (cash card) is read with the magnetic card reader 22 and the password of the customer is input from the pin-pad 18. The detailed shopping information generated in the POS terminal 16 is transferred to the host computer 10 of the bank from the host computer 12 of the shop via the host computer of the digital cash system and the network and is then stored in the storage device 24.

The route for outputting the detailed shopping information is indicated by the arrow mark of the solid line. When the shopping list is to be printed and output in the shop, the detailed shopping information is transferred to the detailed shopping data output device 46 installed in the shop from the host computer 10 of the bank via the host computers of the digital cash system and the shop. Thereby, the detailed shopping information is printed as an output from the printer 48.

When an ATM 40 is used, the detailed shopping information is transferred to the ATM 40 from the host computer 10 of the bank and the detailed shopping information is printed and output, for example, from a printer 42.

Moreover, the host computer 10 of the bank transfers the detailed shopping information to the direct-mail printer 44 to directly deliver the information to the customer by direct-mail 26 or to transmit the information directly to the customer's facsimile 52 and personal computer 54.

Moreover, only the example of collecting, in the financial institution, the information of the shopping utilizing the digital cash system is explained above, but the information of shopping conducted by the other payment method may be collected in the financial institution together with the information of shopping in which payment has been made by the digital cash system. It is important for the present invention that the shopping information of customers can be collected at a time in the financial institution.

As explained above, according to the present invention, it is possible to offer a very efficient service to the customers utilizing the digital cash system and such a digital cash system can be very much promoted.

Particularly, in the case of the cash card type digital cash system, inquiry is made for the balance to the financial institution when payment is executed. Therefore, paying attention to this point, the shopping information can be transferred to the financial institution at the time of making inquiry by recording the shopping history in the past of the customer to the financial institution and the shopping information can also be easily recorded to the financial institution. In addition, when the shopping history information recorded in the financial institution is transferred and output to the shop, a customer can get such shopping information at the time of current shopping.

Meanwhile, it is also possible to output the shopping history information when a customer utilizes the ATM 40 because the host computer 10 of the financial institution is connected on the online basis to the ATM 40 installed therein. Even if the digital cash system is spread, the cash is still used and it can also be assumed that the customer naturally utilizes the financial institution 10. Therefore, it is also very convenient for customers that the shopping history information is provided to customers using the ATM 40, etc., of the financial institution 10.

A customer can determine the necessity of recording of shopping information depending on the request. Therefore, a customer is assumed not to have any dissatisfaction for recording of the shopping information to the financial institution 10.

Meanwhile, from the viewpoint of the financial institution 10, a difference from the other financial institution can be made clear by providing the shopping information recording service to the customers and therefore this service may be thought as a strategy for getting customers.

The present invention is not limited to the claimed embodiment and can be changed or modified in various ways.

## Claims

1. A digital cash system comprising:
a shop computer provided in a shop; and
a host computer provided in a financial institution connected to said shop computer with a communication network,
wherein said shop computer comprises:
a reading means for reading information recorded on a cash card carried by a customer; and
an adjusting means for adjusting a payment for an amount of shopping, and
wherein said host computer provided in the financial institution comprises:
a storage means for storing account information of customers in view of storing, as said account information, the information for identifying the account. information about the balance of said account and shopping history information of a customer having said account who has shopped with the digital cash payment system.

2. A settlement system, comprising:
input means for inputting information for identifying account of a customer;
searching means for searching account information corresponding to said account identifying information from a storage means in which the account information of a customer is stored on the basis of said input account identifying information;
determining means for determining whether or not the shopping history information of a relevant customer is stored in said account information; and
output means for outputting said shopping history information whenever said shopping history information is stored.

3. A shop terminal connected to a computer provided in a financial institution, comprising:
a reading means for reading account information of a customer from a storage medium carried by said customer;
an input means for inputting a password of the customer; and
an adjusting means for adjusting a payment for an amount of shopping by the customer,
wherein the account information read from said storage medium is provided to said computer of the financial institution whenever said customer has made a purchase and detailed information of shopping adjusted for payment is transferred to said computer when payment of shopping is adjusted with said adjusting device.

4. A shop terminal as claimed in claim 3, wherein a collection of YES/NO information, which indicates a necessity or a non-necessity of collection of detailed information of shopping, is received from said computer of the financial institution prior to the transfer of said detailed information; and
detailed information of shopping by said customer is transferred to said computer of the financial institution only when it is determined that the collection YES/NO information is YES.

5. A shop terminal connected to a computer of a financial institution, comprising:
a reading means for reading the account information of a customer from a storage medium carried by said customer; and
an input means for inputting a password of said customer, wherein the account information read from said storage medium is transferred to said computer of the financial institution and the detailed information of shopping by said customer transferred from said computer of the financial institution is output from an output device in response to said account information.

6. A shop terminal connected to a computer of a financial institution, comprising:
a reading means for reading account information of a customer from a storage medium carried by the customer;
an input device; and
an output device,
wherein the account information read from said storage medium is transferred to said computer of the financial institution,
wherein, whenever it is notified from said computer of said financial institution in response to said account information that the detailed information of shopping by said customer is stored in said computer of the financial institution, output of the detailed shopping information is requested to said computer of financial institution based on a necessity or a non-necessity of output of detailed shopping information input from said input device; and
the detailed shopping information of said customer transferred from said computer of the financial institution in response to said request is output from said output device.

7. An information processor installed in a financial institution, comprising:
a storage means for storing account information of each customer and corresponding detailed information of shopping which was made in the past;
searching means for searching the corresponding account information from said storage means based on the account identifying information transmitted from a connected shop terminal; and
identifying means for identifying whether or not said detailed information is stored in said storage means device corresponding to said account information searched,
wherein, whenever said detailed information is stored in said storage means, said detailed information is transferred to the shop terminal to which said account identifying information is transferred.

8. An information processor installed in a financial institution, comprising:
a storage means for storing account information of each customer and corresponding detailed information of shopping which was made in the past;
searching means for searching the corresponding account information from said storage means based on the account identifying information transmitted from a connected shop terminal; and
storing means for storing the detailed shopping information transmitted from said shop terminal to said storage means in correspondence to said searched account information.

9. An information processor as claimed in claim 8, wherein said storage means is also provided information indicating collection propriety of said detailed shopping information and said searching means refers to said collection propriety information at the time of searching the account information and then transmits, to said shop terminal, collection propriety referred prior to reception of said detailed information.

10. A settlement system to make payment by drawing an amount of shopping from the account of a financial institution, wherein detailed shopping information including information for identifying shopping goods and a price of goods is transmitted to the financial institution and said detailed shopping information is stored corresponding to the account for drawing the amount of shopping in the financial institution.

11. A settlement system as claimed in claim 10, wherein the goods information for the shopping during the predetermined period stored in each account of said financial institution is collected to generate said detailed shopping information and said detailed shopping information is notified to the account owner.
